Europäisches Patentamt

European Patent Office

Office européen des brevets

(19)

(11) **EP 0 283 721 B2**

(12) **NEUE EUROPÄISCHE PATENTSCHRIFT**

(45) Veröffentlichungstag und Bekanntmachung des Hinweises auf die Entscheidung über den Einspruch:
**21.01.1998 Patentblatt 1998/04**

(51) Int. Cl.[6]: **B01D 53/02**, B01D 53/34, B01D 53/64

(45) Hinweis auf die Patenterteilung:
**09.12.1992 Patentblatt 1992/50**

(21) Anmeldenummer: **88102412.9**

(22) Anmeldetag: **19.02.1988**

(54) **Verfahren zum Entfernen von Schadstoffen aus Gas**

Process for removing noxious materials from a gas

Procédé pour enlever des matériaux nocifs de gaz

(84) Benannte Vertragsstaaten:
**AT BE CH DE ES FR GB IT LI NL SE**

(30) Priorität: **26.02.1987 DE 3706131**

(43) Veröffentlichungstag der Anmeldung:
**28.09.1988 Patentblatt 1988/39**

(73) Patentinhaber:
• **Rheinbraun Aktiengesellschaft**
  **50935 Köln (DE)**
• **STADTWERKE DUSSELDORF AG.**
  **D-40215 Düsseldorf (DE)**

(72) Erfinder:
• **Marnet, Crysanth, Dr.rer.nat.**
  **D-4000 Düsseldorf (DE)**
• **Kassebohm, Borchert, Dipl.-Ing.**
  **D-4000 Düsseldorf (DE)**
• **Wolfering, Gunther, Dipl.-Ing.**
  **D-4000 Düsseldorf 13 (DE)**

• **Asmuth, Peter, Dr.-Ing.**
  **D-4040 Neuss 21 (DE)**
• **Ritter, Günther, Dr.-Ing.**
  **D-5040 Brühl (DE)**

(74) Vertreter:
**Koepsell, Helmut, Dipl.-Ing.**
**Frankenforster Strasse 135-137**
**51427 Bergisch Gladbach (DE)**

(56) Entgegenhaltungen:
EP-A- 0 193 135          WO-A-85/03455
WO-A-86/00243          DE-A- 3 402 764
US-A- 4 211 541

• MÜLL UND ABFALL, 2/86, Seiten 62 - 71
• STAUBJOURNAL, Nr. 100, 1983, Seiten 39 - 51
• VGB KRAFTWERKSTECHNIK, Heft 8, 1985, Seite 762

EP 0 283 721 B2

**Beschreibung**

Die Erfindung betrifft ein Verfahren zum Entfernen von Schadstoffen aus vorzugsweise staubarmen Gasen durch Adsorption von wenigstens einem Teil der Schadstoffe an Aktivkohle oder Koks.

Zum Reinigen beispielsweise von Rauchgasen, die aus mit fossilen Brennstoffen betriebenen Wärmekraftwerken kommen, reicht es im allgemeinen aus, das Rauchgas zu entstauben und die in ihm enthaltenen Schwefelverbindungen und Stickoxide ganz oder in einem so großen Umfang zu entfernen, daß eine Beeinträchtigung der Umwelt durch diese Verunreinigungen nicht zu befürchten ist. Die bekannten Verfahren und Maßnahmen zum Reinigen beispielsweise von Rauchgasen sind jedoch wenig brauchbar für das Entfernen von Schwermetallen aussolchen Gasen. Schwermetalle treten insbesondere im Rauchgas von Müllverbrennungsanlagen, aber auch in industriellen Prozeßgasen auf. Die pro Volumeneinheit Gas vorhandenen Mengen an Schwermetall sind zwar in den meisten Fällen sehr gering. Bei den großen Gasmengen, z. B. bei Rauchgas, wäre jedoch bei Anlegung der heute üblichen Anforderungen die Belastung der Umwelt durch die Schwermetalle zu groß, als daß sie mit dem Gas in die Atmosphäre ausgetragen werden könnten.

In EP-A-0193135 wird ein Verfahren zum Reinigen von Rauchgasen beschrieben, bei welchem das Vorhandensein von Schwermetallverbindungen in den Rauchgasen vorausgesetzt ist. Die Schwermetallverbindungen sollen durch Adsorption an kohlenstoffhaltigen Substanzen aus dem Rauchgas abgeschieden werden. Jedoch handelt es sich bei dem dazu benutzten Bett aus Adsorptionsmaterial um dasselbe Bett, das auch zum Entfernen der restlichen Gehalte an Schwefelverbindungen dient. Somit kann dieses auch mit Schwermetallverbindungen beladene Adsorptionsmaterial nur bei Vorliegen bestimmter Voraussetzungen einer Feuerung zugeführt und darin durch Verbrennen entsorgt werden. Dem soll bei dem bekannten Verfahren dadurch Rechnung getragen werden, daß die Feuerung als Schmelzfeuerung oder als Staubfeuerung mit trockenem Ascheabzug ausgebildet ist, um die mit dem Adsorptionsmaterial mitgeführten Bestandteile in die Schlacke bzw. Asche einzubinden. Dies schränkt die Verwendbarkeit des bekannten Verfahrens ein, da in vielen Fällen bezüglich der Feuerungsart keine oder nur eine begrenzte Wahlmöglichkeit besteht. Letzteres gilt insbesondere für Müllverbrennungsanlagen. Überdies führt ein Einbinden der mit dem Adsorptionsmaterial mitgeführten Bestandteile, wenn es sich dabei um Schwermetallverbindungen handelt, auch zu einer entsprechenden Belastung der Aschen oder Schlacken, so daß entweder die Menge der Schwermetalle in den Aschen oder Schlacken sehr gering sein muß oder aber bei der Entsorgung derartiger Aschen und Schlacken neue Probleme entstehen.

Demzufolge liegt der Erfindung die Aufgabe zugrunde, das Verfahren gemäß dem Oberbegriff des Anspruches 1 so auszugestalten, daß auch Schwermetalle, die als Verunreinigungen im Gas vorhanden sind, aus diesem auf einfache Weise ausgeschieden werden können, ohne daß die Funktion der zum Entfernen ggf. vorhandener weiterer Verunreinigungen erforderlichen Einrichtungen irgendwelche Beeinträchtigungen und/oder die in diesen Einrichtungen verwendeten oder aufgrund der Behandlung des Gases anfallenden Materialien eine ins Gewicht fallende Verunreinigung durch Schwermetalle erfahren, die die Verwendung und/oder Entsorgung dieser Materialien beeinträchtigen oder erschweren. Ferner wird angestrebt, daß das Material, welches mit den aus dem Gas entfernten Schwermetallen beladen wird, eine große Beladungskapazität für Schwermetalle hat, so daß mit kleinen Mengen dieses Material zu großen Mengen an Schwermetalle gebunden werden kann und somit die Entsorgung des beladenen Materials keine Schwierigkeiten bereitet.

Diese Aufgabe wird gelöst durch die im Kennzeichen des Anspruches 1 angegebenen Maßnahmen.

Es hat sich herausgestellt, daß Aktivkohle und Koks eine außerordentlich hohe Adsorptionsfähigkeit für Schwermetalle aufweisen, die sich in zweierlei Hinsicht auswirkt. Einmal ist die Beladungskapazität dieser Materialien für Schwermetalle sehr groß, so daß eine verhältnismäßig geringe Menge an Aktivkohle oder Koks große Mengen an Schwermetall aufnehmen kann, ohne daß die Adsorptionsfähigkeit merkliche Einbußen erleidet. Zum anderen wirkt sich die gute Adsorptionsfähigkeit dahingehend aus, daß die Adsorption sehr schnell erfolgt. So hat sich herausgestellt, daß eine Erstreckung eines aus Aktivkohle oder Koks bestehenden Bettes in Strömungsrichtung des Gases von 100 mm ausreichen kann, um im Gas enthaltendes Quecksilber (Hg) vollständig zu entfernen. Somit wird nur wenig Material zum Adsorbieren einer großen Menge an Schwermetall benötigt. Dies ist deshalb wichtig, weil das mit Schwermetallen beladene Material im allgemeinen gesondert entsorgt werden muß, also beispielsweise nicht verbrannt werden kann, da bei der Verbrennung der mit den Schwermetallen beladenen Materialien die Schwermetalle in die Rauchgase gelangen und erneut mittels Adsorption abgeschieden werden müßten. Dies würde zu einer ständigen Zunahme des Schwermetallgehalts im Gas führen.

Für die Verwendung von Aktivkohle oder Koks für die Adsorption von Schwermetallen ist weiterhin von Bedeutung, daß, wenn, wie es in vielen Fällen unvermeidbar ist, Aktivkohle oder Koks auch andere Substanzen, beispielsweise im Gas enthaltene Schwefelverbindungen adsorbieren, dies die Adsorptionsfähigkeit von Aktivkohle oder Koks für die Schwermetalle nicht beeinträchtigt. Zwar werden Schwefelverbindungen von Aktivkohle oder Koks ebenfalls adsorbiert. Jedoch hat sich gezeigt, daß die von diesen Materialien adsorbierten Schwermetalle ggf. bereits vorher abgelagerte Schwefelverbindungen in Strömungsrichtung des Gases innerhalb des Filter verdrängen, so daß die Beladungskapazität von Aktivkohle oder Koks für die Schwermetalle trotz ggf. im zu reinigenden Gas vorhandener Schwefelverbindungen aufrechterhalten bleibt.

Das Verfahren gemäß der Erfindung ist deshalb auch dann mit Vorteil anwendbar, wenn das zu reinigende Gas noch andere Verunreinigungen enthält, wie dies z. B. bei Rauchgas der Fall ist, das normalerweise auch Schwefelverbindungen und Stickoxide enthält, die entfernt werden müssen, bevor das Rauchgas in die Atmosphäre gegeben werden kann. Zur weitgehenden Entfernung der Schwefelverbindungen durchströmt das Gas eine Rauchgas-Entschwefelungseinrichtung, die in Strömungsrichtung vor oder nach dem Schutzfilter angeordnet sein kann. Darüber hinaus besteht die Möglichkeit, daß das Gas nach Passieren der Entschwefelungs-Einrichtung und des Schutzfilters durch ein Bett geführt wird, in welchem im Rauchgas noch verbliebene Schwefelverbindungen adsorbiert werden. Darüber hinaus kann eine Denoxierungsstufe vorgesehen sein, in welcher im Gas enthaltene Stickoxide unter Zugabe von Ammoniak zu molekularem Stickstoff umgewandelt werden.

Bei Verwendung der üblichen Betten insbesondere aus Koks oder Aktivkohle für die Nachentschwefelung und/oder die Denoxierung würden die im Rauchgas befindlichen Schwermetalle zwar von diesen Betten adsorbiert, so daß sie nicht mit dem Rauchgas in die Atmosphäre gelangten. Dies gilt zumindest in gewissem Umfang auch dann, wenn für die Denoxierung ein Katalysatorbett aus anderem Material, beispielsweise ein SCR-Katalysator (Selective Catalytic Reduction) verwendet wird. In jedem Fall würden jedoch an anderen Stellen Probleme entstehen. Zudem besteht bei Verwendung von SCR-Katalysatoren die Befürchtung, daß diese durch Schwermetalle geschädigt werden, so daß diese sehr teuren Katalysatoren schon nach kurzer Zeit nicht mehr die geforderte katalytische Aktivität aufweisen.

Wenn die für die Nachentschwefelung und/oder die Denoxierung verwendeten Betten aus Koks, insbesondere Herdofenkoks, nicht durch Schwermetalle verunreinigt sind, bereitet die Entsorgung keinerlei Schwierigkeiten. Der Koks aus dem Bett für die Nachentschwefelung kann in beladenem Zustand, also mit den von ihm aufgenommenen Schwefelverbindungen, in die Feuerung, deren Rauchgase zu reinigen sind, zurückgeführt werden. Dort gelangen die Schwefelverbindungen zwar zumindest teilweise wieder in die Rauchgase, werden jedoch ohne Schwierigkeiten in einer Rauchgas-Entschwefelungseinrichtung üblicher Bauart, die dem Bett für die Nachentschwefelung vorgeschaltet ist, entfernt. Da Koks verhältnismäßig billig ist, stellt somit die Verbrennung des mit den Schwefelverbindungen beladenen Kokses die einfachste und wirtschaftlichste Art der Entsorgung dar. Bei Verwendung eines Koksbettes als Katalysator auch für die Denoxierung tritt, wenn von diesem Bett keine anderen Substanzen adsorbiert werden, theoretisch überhaupt kein Verbrauch auf, da der Koks lediglich als Katalyator wirkt. Wenn er, wie in der Praxis unvermeidbar, trotzdem in bestimmten Zeitabständen ersetzt werden muß, kann der verbrauchte Koks ebenfalls ohne Schwierigkeiten in die Feuerung zurückgeführt werden.

Wenn die Kokse aus beiden Betten hingegen auch mit Schwermetallen beladen wären, würden Rückführung und Verbrennung dieses Kokses in die Feuerung eine Anreicherung der Schwermetalle im Rauchgas zur Folge haben, da die mit dem Koks in die Feuerung eingeführten Schwermetalle in mehr oder weniger vollem Umfangewieder ins Rauchgas gelangen. Bei Verwendung von anderen Katalysatoren, beispielsweise den vorerwähnten SCR-Katalysatoren, würde die Anlagerung von Schwermetallen eine erhebliche Beeinträchtigung der katalytischen Wirksamkeit zur Folge haben. Das Entfernen der Schwermetallablagerungen von diesen Katalysatoren ist sehr aufwendig.

Zwar wäre es wahrscheinlich möglich, bei Anwendung einer üblichen Naßentschwefelung unter Verwendung von basischen Sorbentien, z. B. Natronlauge (NaOH), Kalkstein (CaCO$_3$) oder gelöschtem Kalk (Ca(OH)$_2$) in der Rauchgas-Entschwefelungseinrichtung zumindest einen Teil der Schwermetalle mit dem Schwefel aus dem Rauchgas auszuscheiden. Dies hätte allerdings zur Folge, daß die bei der Naßentschwefelung anfallenden Abfallprodukte, bei denen es sich um Anhydrit (CaSO$_4$) und Gips (CaSO$_4$. 2H$_2$O) handelt, die ausgewaschenen Schwermetalle enthielten, so daß die Entsorgung oder sonstige Verwertung dieser Abfallprodukte, die beispielsweise in der Bauindustrie verwendet werden könnten, aufgrund ihres Gehalts an Schwermetallen Schwierigkeiten bereitet.

Die Anwendung des Schutzfilters gemäß der Erfindung zum Ausscheiden der Schwermetalle aus dem Gas vereinfacht in jedem Fall die Verfahrensführung, insbesondere also auch in jenen Anwendungsfällen, in denen, wie es zumeist der Fall ist, noch andere Verunreinigungen aus dem Gas entfernt werden müssen, wobei ebenfalls die Notwendigkeit besteht, die Trägermaterialien für die Verunreinigungen zu entsorgen. Das Vorhandensein von Schwermetallen in diesen mit anderen Verunreinigungen beladenen Trägermaterialien würde deren Entsorgung in jedem Falle erheblich komplizieren. Dies wird durch die Anwendung der Lehre gemäß der Erfindung auf einfache und billige Weise vermieden. Dies gilt im übrigen auch für Aktivkohle oder Kokse, die zum Entfernen von unverbrannten Kohlenwasserstoffen, z. B. polyzyklischen Kohlenwasserstoffen und Dioxinen, die insbesondere in Rauchgasen von Müllverbrennungsanlagen vorkommen, verwendet werden. Die mit diesen Substanzen beladenen Aktivkohlen oder Kokse können zur Entsorgung ohne weiteres verbrannt werden, da die Substanzen unter der Einwirkung der hohen Feuerungstemperaturen jedenfalls überwiegend zu unschädlichen Verbindungen umgesetzt werden. Bei gleichzeitiger Beladung von Aktivkohle und Koks mit Schwermetallen wäre dies nicht möglich, wenn eine Anreicherung der Schwermetalle im Rauchgas vermieden werden soll.

Das Schutzfilter besteht in besonders zweckmäßiger Weise aus einem Bett aus Herdofenkoks` der verhältnismäßig billig ist und ein großes Adsorptionsvermögen aufweist. Es ist aber auch möglich, andere Kokse oder Aktivkohle für diese Zwecke zu verwenden.

Der vorstehend erwähnte Herdofenkoks hat in Bezug auf die Adsorptionsfähigkeit sowohl für Schwermetalle als auch für die anderen Verunreinigungen ganz besonders günstige Eigenschaften. Die Erzeugung des Herdofenkokses sowie seine Eigenschaften sind in den nachfolgenden Veröffentlichungen beschrieben:

H.B. Königs: "Feinkokserzeugung durch Braunkohle", Energiewirtschaftliche Tagesfragen, 27. Jg. 1977, Heft 8/9 S. 569 - 599;
E. Scherrer: "Herstellung von Braunkohlenkoks im Salem-Lurgi-Herdofen", Braunkohle, Heft 7, Juli 1981, S. 242-246;
D. Boecker: "Edle Körner", Energie, Jg. 35, Heft 3, 1983.

Die Vorteile der erfindungsgemäßen Verfahrensführung lassen sich dahingehend zusammenfassen, daß die dem Schutzfilter nachgeschalteten Einrichtungen für das Reinigen des Gases durch Schwermetalle nicht oder nur in einem solch geringen Maße verunreinigt werden, daß es ohne weiteres möglich ist, bei Verwendung von Koks für diese Einrichtungen, also beispielsweise als Adsorptionsmittel für die Entfernung von Schwefelverbindungen und/oder als Katalysator für die Denoxierung, diesen Koks in einer Feuerung zu verbrennen, so daß eine problemlose Entsorgung möglich ist. Bei Verwendung von anderen Katalysatoren, beispielsweise SCR-Katalystoren ist nicht zu befürchten, daß diese durch Schwermetalle vergiftet werden und dadurch in kurzer Zeit eine erhebliche Verringerung ihrer katalytischen Wirkung erfahren. Ferner kann eine ggf. vorhandene Rauchgas-Entschwefelungseinrichtung so betrieben werden, daß darin keine Schwermetalle abgeschieden und somit die den Schwefel enthaltenden Produkte der Rauchgas-Entschwefelungseinrichtung, also im allgemeinen Gips und/oder Anhydrit, keine ins Gewicht fallenden Verunreinigungen durch Schwermetalle aufweisen.

Zwar besteht die Notwendigkeit, das das Schutzfilter bildende Material, welches mit den aus dem Rauchgas abgeschiedenen Schwermetallen beladen ist, in besonderer Weise zu entsorgen, da es normalerweise nicht in die Feuerung gebracht und dort verbrannt werden kann. Jedoch ergibt die erfindungsgemäße Verfahrensführung den Vorteil, daß, da die Schwermetalle ganz oder zumindest ganz überwiegend im Schutzfilter adsorbiert werden und letzteres eine verhältnismäßig lange Standzeit hat, die Menge des mit Schwermetall beladenen Materials, das in besonderer Weise zu entsorgen ist, gering bleibt.

Aufgrund der großen Beladungskapazität von Aktivkohle oder Koks für Schwermetalle kann in Abhängigkeit von den jeweiligen Gegebenheiten die Standzeit des Schutzfilters in stärkerem Maße bestimmt werden durch den Staubgehalt des durch das Filter hindurchströmenden Gases, z.B. Rauchgases als durch dessen Gehalt an Schwermetallen, Zwar wird im allgemeinen das Rauchgas, bevor es das Schutzfilter erreicht, eine Entstaubungseinrichtung, beispielsweise einen elektrostatischen Filter durchlaufen. Jedoch werden - wenn auch geringe - Staubreste im Rauchgas verbleiben, die im Schutzfilter abgeschieden werden mit der Folge, daß das Schutzfilter durch diesen Staub im Laufe der Zeit zugesetzt wird. Normalerweise wird dies zu einem Zeitpunkt der Fall sein, der lange vor dem Zeitpunkt liegt, zu welchem das Filter mit Schwermetallen gesättigt ist, letztere also durchschlagen. Um zu vermeiden, daß das Filtermaterial lediglich aufgrund der durch den sich darin ansammelnden Staub bewirkten Erhöhung des Strömungswiderstandes ausgewechselt und entsorgt werden muß, besteht ohne weiteres die Möglichkeit, das Filtermaterial einem Klassiervorgang, beispielsweise durch Sieben zu unterziehen, um so den im Filter aus dem Rauchgas abgeschiedenen feinstkörnigen Staub vom Filtermaterial zu trennen, so daß dieses, solange es noch nicht mit den Schwermetallen gesättigt ist, weiter im Schutzfilter verwendet werden kann.

Die Erfindung ist insbesondere auf das Reinigen von Rauchgas aus Müllverbrennungsanlagen und Industriegasen anwendbar, ohne indes darauf beschränkt zu sein. Vielmehr besteht durchaus die Möglichkeit, daß Rauchgase, die durch das Verbrennung von fossilen Brennstoffen entstehen, ebenfalls Schwermetalle, wenn auch in geringeren Mengen, enthalten. Aufgrund der großen Mengen an Rauchgasen kann auch bei einem spezifisch geringen Gehalt an Schwermetallen eine merkliche Umweltbelastung entstehen, die durch die Anwendung der Erfindung vermeidbar ist. Auch hierbei stellt die hohe Schadstoffkonzentration in dem das Schutzfilter bildenden Material einen insbesondere die Wirtschaftlichkeit begünstigenden Vorteil dar, da wenig Filtermaterial zum Abscheiden der Schwermetalle aus dem Rauchgas benötigt wird und demzufolge auch nur entsprechend kleine Mengen an mit Schwermetallen beladenem Filtermaterial entsorgt zu werden brauchen.

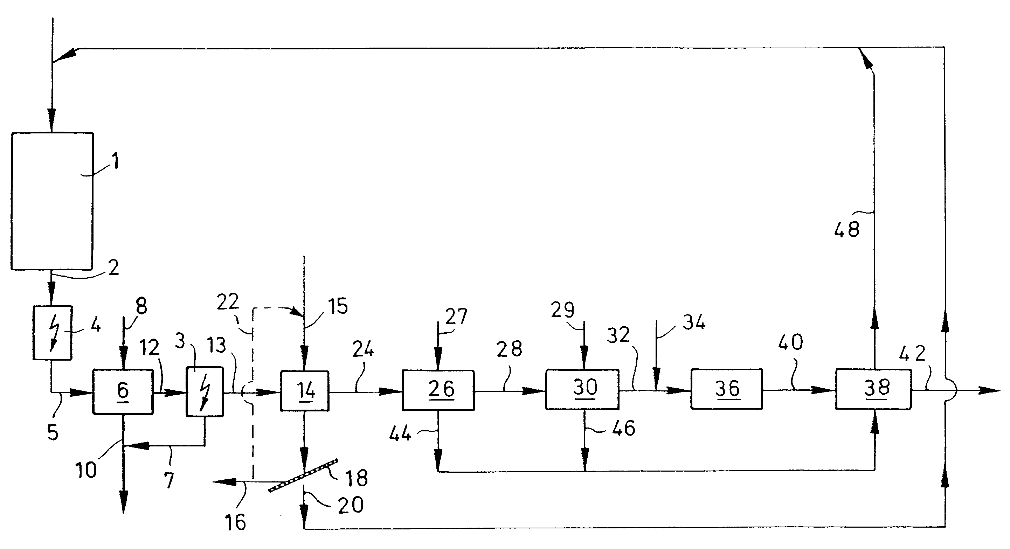

In der Zeichnung ist das Fließbild einer Anlage zum Reinigen von Rauchgasen dargestellt.

Das aus einer Müllverbrennungsanlage oder einem Kraftwerk 1 kommende Rauchgas 2 durchströmt zunächst ein Elektrofilter 4, in welchem es weitgehend entstaubt wird. Das entstaubte Rauchgas 5 wird in eine Entschwefelungsanlage 6 geleitet, in die basische Sorbentien, beispielsweise $CaCO_3$, 8 eingegeben werden. Diese Anlage wird so betrieben, daß im Rauchgas 5 vorhandene Schwermetalle nicht oder nur in geringem Umfang abgeschieden werden, so daß die die Entschwefelungseinrichtung6 verlassenden Produkte 10, Anhydrid (CaSO$_4$) und Gips (CaSO$_4$.2H$_2$O) oder Calciumsulfitverbindungen, die durch Umsetzung der im Rauchgas 5 enthaltenen Schwefelverbindungen mit den basischen Sorbentien 8 entstanden sind, durch Schwermetalle nicht oder nur in einem vernachlässigbaren Umfang verunreinigt sind.

Das so weitgehend von Schwefelverbindungen befreite Rauchgas 12 durchströmt zunächst eine weitere Entstaubungseinrichtung, z. B. ein Elektrofilter 3, und danach ein Schutzfilter 14. Der im Elektrofilter 3 abgeschiedene Staub 7 kann den aus der Entschwefelungseinrichtung 6 ausgetragenen Produkten 10 hinzugefügt werden, da er im wesentlichen die gleiche chemische Zusammensetzung aufweist. Das Schutzfilter 14 besteht im wesentlichen aus einem mit Koks, vorzugsweise Herdofenkoks, gefüllten Gehäuse. In diesem Schutzfilter 14 werden die im Rauchgas 12 enthaltenen Schwermetalle so weitgehend durch den Koks adsorbiert, daß die im Rauchgas 24 eventuell noch verbleibenden Restgehalte an Schwermetall vernachlässigbar gering sind.

Der der Adsorption der Schwermetalle, bei denen es sich normalerweise überwiegend, wenn auch nicht ausschließlich, um Quecksilber und Cadmium handeln wird, dienende Koks 15 wird, wenn seine Adsorptionsfähigkeit für Schwermetalle erschöpft ist, als beladener Koks 16 aus dem Schutzfilter 14 herausgenommen und in geeigneter Weise entsorgt. Aufgrund der großen Adsorptionsfähigkeit insbesondere von Herdofenkoks für Schwermetalle weist das Schutzfilter 14 eine sehr lange Standzeit auf, so daß aufgrund des im Rauchgas 13 auch nach dem Elektrofilter 3 noch verbleibenden restlichen Staubgehaltes das Schutzfilter 14 normalerweise durch diesen Staub eher verstopft ist als die Adsorptionsfähigkeit des darin enthaltenen Kokses für Schwermetalle erschöpft ist, Es ist daher die Möglichkeit vorgesehen, daß der Koks aus dem Schutzfilter 14 in bestimmten Zeitabständen, deren Länge vom restlichen Staubgehalt des Rauchgases 5 abhängt, einem Klassiervorgang unter Verwendung beispielsweise eines Siebes 18 unterzogen wird, um den Staub aus dem von Koks gebildeten Filterbett14 zu entfernen. Der Durchgang 20 des Siebes 18 wird ganz überwiegend durch diesen Staub gebildet. Die merklich gröberen Kokskörner 22, die den Siebüberlauf bilden, können wieder in das Schutzfilter 14 eingebracht werden.

Das aus dem Schutzfilter 14 kommende, von Schwermetallen gereinigte Rauchgas 24 wird durch ein Adsorptionsbett 26 geleitet, welches ebenfalls aus Koks 27, vorzugsweise Herdofenkoks besteht und zur Entfernung der nach Passieren der Entschwefelungseinrichtung 6 im Rauchgas 12 noch verbliebenen Schwefelverbindungen dient, die vom Koks adsorbiert werden.

Das somit praktisch schwefelfreie Rauchgas 28 gelangt in ein weiteres Bett 30, welches ebenfalls mit Koks 29, vorzugsweise Herdofenkoks beschickt wird und dazu dient, die Salzsäure aus dem Rauchgas 28 zu entfernen. Im Anschluß daran wird dem Rauchgas 32 Ammoniak 34 zugegeben. In der Anschließenden Denoxierungsstufe 36 erfolgt die katalytische Reduktion der im Rauchgas 32 enthaltenen Stickoxide zu molekularem Stickstoff und Wasser. Diese Umsetzung läuft nach der folgenden Gleichung ab:

$$4 \text{ NO} + 4 \text{ NH}_3 + \text{O}_2 \rightarrow 4 \text{ N}_2 + 6 \text{ H}_2\text{O}.$$

Auf diese Weise können mit Hilfe von Aktivkohle, Koks oder auch ggf. SRC-Katalysatoren die im Rauchgas32 vorhandenen Stickoxide um 80 - 90% reduziert werden.

In der nachfolgenden Stufe 38 wird das aus der Denoxierungsstufe 36 kommende Rauchgas 40 durch ein weiteres Bett 38 aus Koks, vorzugsweiseaus säurebeladenem Herdofenkoks geleitet, in welchem die nicht umgesetzten Mengen des zur Denoxierung dem Rauchgas 32 beigegebenen Ammoniaks 34 aus dem Rauchgas 40 entfernt werden. Das so gereinigte Rauchgas 42 kann dann in die Atmosphäre gegeben werden.

Die Behandlungsstufen 26, 30 und 38 sind bei dem in der Zeichnung dargestellten Ausführungsbeispiel als Wanderbetten ausgebildet. Die aus den Stufen 26 und 30 abgezogenen beladenen Koksmengen 44 bzw. 46 werden zunächst in die Stufe 38 geführt, in welcher das nicht umgesetzte Ammoniak 34 durch Adsorption aus dem Rauchgas 40 entfernt wird. Der die Stufe 38 verlassende Koks 48 wird in die Feuerung 1 gebracht und dort verbrannt. Der Koks aus der Denoxierungsstufe 36 kann, wenn er ersetzt werden muß, ebenfalls in der Feuerung verbrannt werden (nicht gezeigt).

Der Durchgang 20 des Siebes 18, also der Staub, der im Schutzfilter 14 aus dem Rauchgas 12 entfernt worden war, kann ebenfalls in die Feuerung 1 zurückgeführt werden. Es muß zwar damit gerechnet werden, daß der Siebdurchgang 20 auch einen geringen Anteil an Abrieb des Kokses aus dem Schutzfilter 14 aufweist, wobei dieser Abrieb mehr oder weniger stark mit Schwermetallen beladen ist. Der Anteil des Abriebs an der gesamten Menge des Kokses aus dem Schutzfilter 14 ist jedoch so gering, daß die mit ihm über den Siebdurchgang 20 in die Feuerung 1 gelangende Menge an Schwermetallen nicht ins Gewicht fällt. Jedenfalls ist sieso gering, daß sie beim Durchgang durch das Schutzfilter 14 von diesem adsorbiert wird. Entsprechendes gilt, wenn auch der Staub 20 geringe Mengen an Schwermetallen aufgenommen haben sollte.

Selbstverständlich wird des Schutzfilter 14 nicht nur Schwermetall, sondern auch andere Verunreinigungen, soweit sie adsorbierbar sind, also beispielsweise Schwefelverbindungen, aufnehmen. Dadurch wird die Adsorptionsfähigkeit des im Schutzfilter 14 vorhandenen kohlenstoffhaltigen Materials jedoch nicht beeinträchtigt. Irgendwann wird das Schutzfilter 14 mit den Schwefelverbindungen gesättigt sein und somit keine weiteren Schwefelverbindungen adsorbieren können. Dies ist jedoch ohne Bedeutung, da für das Entfernen der im Rauchgas 24 noch enthaltenen restlichen Schwefelverbindungen ohnehin das Bett 26 vorgesehen ist. Entsprechendes gilt auch für die Belasung des im Schutzfilter 14 befindlichen Kokses 15 mit HCl, wenngleich sich herausgestellt hat, daß bei den Adsorptionsvorgängen $SO_2$ einerseits und HCl andererseits einander beeinflussen derart, daß die Konzentration von $SO_2$ bzw. des daraus gebildeten $H_2SO_4$ mit der Bett-Tiefe abnimmt, wohingegen die Konzentration an HCl in Strömungsrichtung im Bett zunimmt. Dies wird darauf zurückzuführen sein, daß $SO_2$ bzw. $H_2SO_4$ bereits vom Koks adsorbiertes HCl wieder von der Koksoberfläche ablöst und in Strömungsrichtung verdrängt. Aus diesem Grunde kann es zweckmäßig sein, für die Adsorption von $SO_2$ einerseits und HCl andererseits getrennte Betten vorzusehen, wenngleich es abweichend von dem in der Zeichnung dargestellten Ausführungsbeispiel auch ohne weiteres möglich ist, mehrere Betten, ggf. auch unter Einfluß des der Denoxierung dienenden Bettes 36, zusammenzufassen.

Es sind noch weitere Abwandlungen des in der Zeichnung dargestellten Ausführungsbeispiels möglich. So kann zwischen Entschwefelungseinrichtung 6 und Schutzfilter 14 eine weitere Entstaubungseinrichtung vorgesehen sein. Es ist auch möglich, lediglich eine zwischen Entschwefelungseinrichtung 6 und Schutzfilter 14 angeordnete Entstaubungsvorrichtung vorzusehen. An der grundsätzlichen Verfahrensführung ändert dies nichts. Entschiedend ist, daß ein Schnutzfilter14 vorgesehen ist, welches die Schwermetalle aus dem Rauchgas 12 adsorbiert, so daß die in den nachfolgenden Reinigungsstufen als Adsorptionsmittel und/oder Katalysatoren benutzen Substanzen durch die Schwermetalle nicht oder jedenfalls nicht wesentlich verunreinigt werden.

**Patentansprüche**

1. Verfahren zum Entfernen von Schadstoffen aus vorzugsweise staubarmem, Schwefeloxide und Schwermetalle enthaltendem Gas durch Adsorption von wenigstens einem Teil der Schadstoffe an Aktivkohle oder Koks, wobei das Gas wenigstens zwei in Strömungsrichtung hintereinander befindliche Aktivkohlen- oder Koksbetten durchströmt, von denen wenigstens eines zur Entfernung der restlichen Gehalte an Schwefeloxiden dient, und das Adsorptionsmittel aus dem Bett für die Entfernung der restlichen Schwefeloxide zur Entsorgung in einer Feuerung verbrannt wird, deren Rauchgas durch eine Entschwefelungseinrichtung geführt wird, dadurch gekennzeichnet, daß das Gas zur Abscheidung von in ihm enthaltenen Schwermetallen durch ein Schutzfilter aus Aktivkohle oder Koks geführt wird, bevor es in wenigstens ein weiteres Aktivkohle oder Koks enthaltendes Bett gelangt, in welchem wenigstens der restliche Gehalt an Schwefeloxiden aus dem Gas abgeschieden wird und die beladene Aktivkohle bzw. der beladene Koks aus dem Schutzfilter gesondert entsorgt wird.

2. Verfahren nach Anspruch 1, dadurch gekennzeichnet, daß das Gas die Entschwefelungseinrichtung durchströmt, nachdem es das Schutzfilter passiert hat.

3. Verfahren nach Anspruch 1, dadurch gekennzeichnet, daß das Gas die Entschwefelungseinrichtung durchströmt, bevor es das Schutzfilter passiert.

4. Verfahren nach Anspruch 1, dadurch gekennzeichnet, daß das Gas nach Passieren des Schutzfilters eine Stufe zur Umwandlung von Stickoxiden zu Stickstoff durchströmt.

5. Verfahren nach Anspruch 1, dadurch gekennzeichnet, daß das Gas vor dem Schutzfilter eine Einrichtung zum Entstauben des Gases durchströmt

6. Verfahren nach Anspruch 1, dadurch gekennzeichnet, daß für das Schutzfilter Herdofenkoks verwendet wird.

7. Verfahren nach Anspruch 1, dadurch gekennzeichnet, daß der im Schutzfilter sich absetzende Reststaub aus dem Gas durch einen Klassiervorgang von den das Schutzfilter bildenden Substanzen getrennt wird.

**Claims**

1. A process for removing noxious substances from gas which preferably has a low dust content and which contains sulphur oxides and heavy metals, by adsorption of at least a part of the noxious substances on activated carbon or coke, wherein the gas flows through at least two activated carbon or coke beds which are disposed in succession in the direction of flow and of which at least one serves for removal of the residual contents of sulphur oxides and the adsorption agent from the bed for removal of the residual sulphur oxides is burnt for disposal thereof in a firing installation, the flue gas of which is passed through a desulphurisation device, characterised in that for separation of heavy metals contained in the gas the gas is passed through a protective filter of activated carbon or coke before it passes into at least one further bed which contains activated carbon or coke and in which at least the residual content of sulphur oxides is separated from the gas and the charged activated carbon and the charged coke, respectively from the protective filter is separately disposed of.

2. A process according to claim 1 characterised in that the gas flows through the desulphurisation device after it has passed the protective filter.

3. A process according to claim 1 characterised in that the gas flows through the desulphurisation device before it passes the protective filter.

4. A process according to claim 1 characterised in that after passing the protective filter the gas flows through a stage for the conversion of nitrogen oxidese to nitrogen.

5. A process according to claim 1 characterised in that upstream of the protective filter the gas flows through a device for removing dust from the gas.

6. A process according to claim 1 characterised in that hearth furnace coke is used for the protective filter.

7. A process according to claim 1 characterised in that the residual dust which is deposited in the protective filter from the gas is separated by a grading operation from the substances forming the protective filter.

## Revendications

1. Procédé pour enlever des éléments nocifs d'un gaz de préférence peu chargé en poussière et qui contient des oxydes de soufre et des métaux lourds, en assurant l'adsorption d'au moins une partie de ces éléments nocifs sur du charbon actif ou du coke, le gaz passant pour ce faire à travers au moins deux lits de charbon actif ou de coke disposés l'un à la suite de l'autre dans le sens de l'écoulement, au moins l'un de ces lits de traitement servant à éliminer la teneur résiduelle en oxydes de soufre, et l'agent adsorbant qui provient du lit d'élimination de la teneur résiduelle en oxydes de soufre étant ensuite traité dans une chambre de combustion dont on fait passer le gaz d'échappement dans un appareil de désulfuration, caractérisé en ce qu'on fait passer le gaz à travers un filtre de protection en charbon actif ou en coke pour en séparer les métaux lourds qu'il contient, avant de l'envoyer dans au moins un autre lit de traitement qui contient du charbon actif ou du coke, pour séparer du gaz au moins sa teneur résiduelle en oxydes de soufre, et en ce qu'on dispose séparément du charbon actif ou du coke provenant du filtre de protection et chargé d'impuretés.

2. Procédé selon la revendication 1, caractérisé en ce que le gaz passe dans l'appareil de désulfuration après être passé à travers le filtre de protection.

3. Procédé selon la revendication 1, caractérisé en ce que le gaz passe à travers l'appareil de désulfuration avant de passer dans le filtre de protection.

4. Procédé selon la revendication 1, caractérisé en ce que le gaz, après son passage à travers le filtre de protection, passe dans un étage de traitement prévu pour assurer la transformation des oxydes d'azote en azote.

5. Procédé selon la revendication 1, caractérisé en ce que le gaz, avant de passer dans le filtre de protection, passe à travers un appareil de dépoussiérage du gaz.

6. Procédé selon la revendication 1, caractérisé en ce qu'on utilise du coke de four à sole pour le filtre de protection.

7. Procédé selon la revendication 1, caractérisé en ce qu'on traite la poussière résiduelle du gaz qui s'est déposée dans le filtre de protection, pour la séparer par tamisage des matières qui constituent le filtre.